# EUROPEAN PATENT APPLICATION

(11) **EP 2 490 314 A1**
(43) Date of publication of application: **22.08.2012**
(21) Application number: 11154443.3
(22) Date of filing: 15.02.2011
(51) Int. Cl.: H02J 7/00, H02N 3/00

(54) **Automatic Pollution-Free Energy Generation Device for Transport**

(71) Applicant: Holyma, Limited, Auckland (NZ)
(72) Inventor: Chen, Cung-Hsien, Cambridge, CB1 1AH (GB)
(74) Representative: Horak, Michael

(57) **Abstract**

An automatic pollution-free energy generation device (1, 1a, 1b, 1c) is provided for a transport and is mounted to a wind-receiving portion of the transport. The energy generation device (1, 1a, 1b, 1c) includes an air accumulation device (10, 10a, 10b), an electricity accumulator (11, 11b), an electrical discharge device (12, 12b), a sensor (13, 13b), and an air outlet (14, 14b). The air accumulation device (10, 10b, 10c) forms a temporal air storage chamber (102), which receives air to flow therethrough. The electricity accumulator (11, 11b) is arranged inside the air accumulation device (10, 10b, 10c) is operable to perform electrical discharge to the air inside the chamber or is controlled by a control device (15, 15b, 15c) to discharge electricity, whereby fluid molecules of air carry electricity that is converted into electrical power to be collected by the electricity accumulator (11, 11b) and converted by a current conversion controller (16, 16b) into direct current to be stored in a battery (18, 18b) or to be directly used by the transport.

## Description

### (a) Technical Field of the Invention

The present invention generally relates to an automatic energy generation device, and more particularly to an automatic pollution-free energy generation device for transport that generates no carbon dioxide, requires no expense of time for charging, and is capable of generating electrical power.

### (b) Description of the Prior Art

A storage battery that is commonly used in a conventional electrical vehicle for accumulation of electrical power relies only electrical charging by an external power source before it can power the electrical vehicle to travel for a predetermined distance. This leads to a sever problem of insufficient cruising range of the electrical vehicle. When a storage battery is used in a gasoline engine vehicle, it cannot be fully charged in a short period of time for driving the vehicle. This apparently shows the defect of insufficient cruising range for long distance travel.

In view of such a problem, some of the manufacturers employ wind power generation to charge the storage battery. When a vehicle is traveling, the front portion of the vehicle is upwind. A number of wind power generators are installed at the front portion of the vehicle to convert the wind power into electrical power and a rectifier is employed to convert the electrical power into direct current power for accumulation in the storage battery This arrangement uses the air streams that are caused by the movement of a vehicle to drive fans for generation of electrical power. However, due to the fact that the size of the fans used is constrained by the installation of the vehicle, the area of wind-receiving surface and the available rotational speed of the fans are limited. Consequently, the generated electrical power is limited and the performance for charging the storage battery is low.

### SUMMARY OF THE INVENTION

The primary purpose of the present invention is to provide an automatic energy generation device for ensuring everlasting charging of a transport so as to realize extension of cruising range of the transport.

To achieve the above purpose, the present invention provides an automatic pollution-free energy generation device for transport, which is mounted to a wind-receiving portion of the transport and comprises an air accumulation device, an electricity accumulator, an electric discharge device, a sensor, and an air outlet, wherein the air accumulation device forms a temporal air storage chamber through which air may flow and the electrical discharge device that is arranged inside the air accumulation device may carry out electric discharge in air as desired, or under the control of a control device to discharge electricity so as to make fluid molecules of air carrying electricity for conversion into electrical power (high voltage) and the electricity accumulator then collects the electrical power to allow the electrical power to be converted into direct current power through a current conversion controller for storage in a battery or being directly used by the transport.

Another purpose of the present invention is to provide an automatic pollution-free energy generation device for transport that does not generate carbon dioxides, requires no expense of time for charging, and is capable of generating electrical power.

A further purpose of the present invention is to realize direct application of the electrical power obtained through such a conversion process to charging a battery or being used by a transport.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a cross-sectional view showing an automatic pollution-free energy generation device according to an embodiment of the present invention.
FIG. 2 illustrates the use of the embodiment of the present invention.
FIG. 3 illustrates the operation of the embodiment of the present invention.
FIG. 4 illustrates the use of the embodiment of the present invention.
FIG. 5 shows another embodiment of the present invention.
FIG. 6 is a cross-sectional view showing a further embodiment of the present invention.
FIG. 7 illustrates a further embodiment of the present invention.
FIG. 8 illustrates yet a further embodiment of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

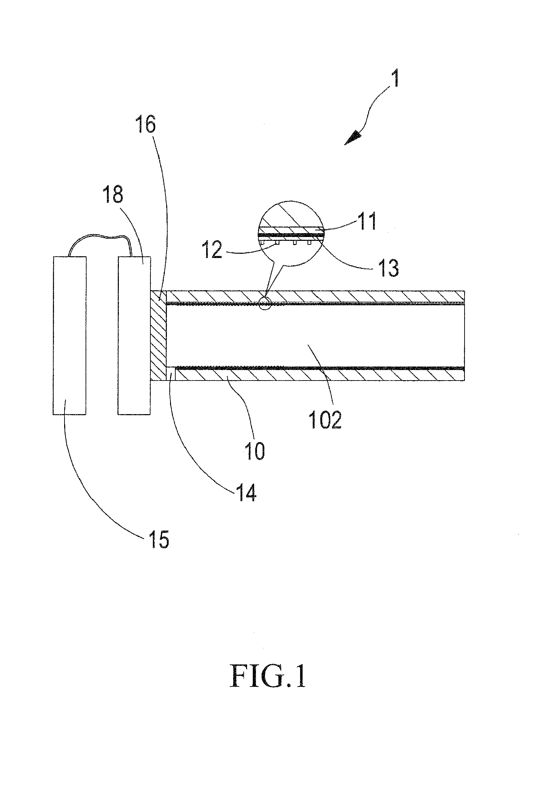

Referring to FIG. 1, which is a cross-sectional view of an automatic pollution-free energy generation device according to an embodiment of the present invention, the automatic pollution-free energy generation device is mountable to a wind (or air stream) receiving portion of a transport, such as a car. The automatic energy generation device, generally designated at 1, comprises an air accumulation device 10, an electricity accumulator 11, an electrical discharge device 12, a sensor 13, and an air outlet 14. The air accumulation device 10 forms a temporal air storage chamber 102, which receives air to flow therethrough. The electrical discharge device 12 is mounted inside the air accumulation device 10 to carry out electrical discharge to the air inside the temporal air storage chamber or the electrical discharge device 12 is operated under the control of the control device 15 that receives and analyzes detection data provided by the sensor 13 in respect of density, temperature, and humidity of the air inside the chamber to determine if to perform electrical discharge to the air according to the result of analysis. When the fluid molecules of air carry electricity, abrasion and impact are induced between the fluid molecules (particles), making the air converted into electrical power (high voltage), and the electricity accumulator 11 converts the electrical power through a current conversion controller 16 into direct-current power to be stored in a battery (lithium cell) 18 or to be directly used by the transport. With the automatic energy generation device 1 described above, everlasting charge can be made to the transport to extend the cruising range thereof.

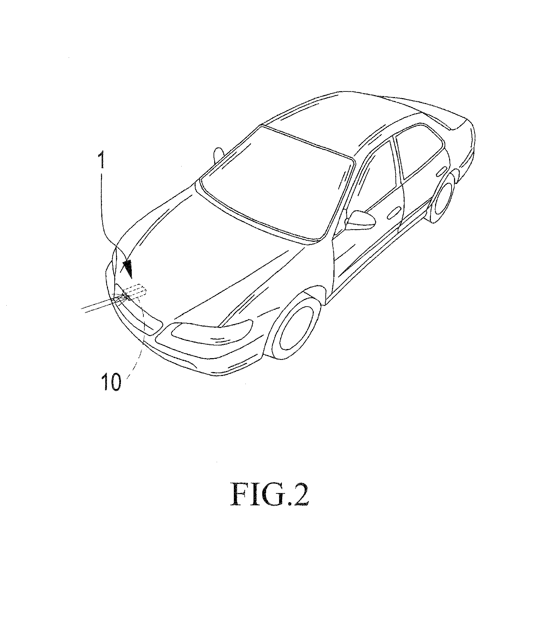

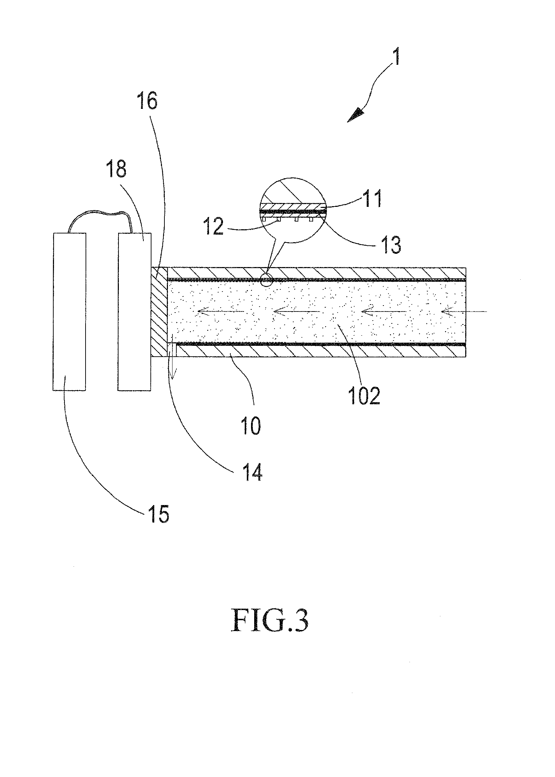

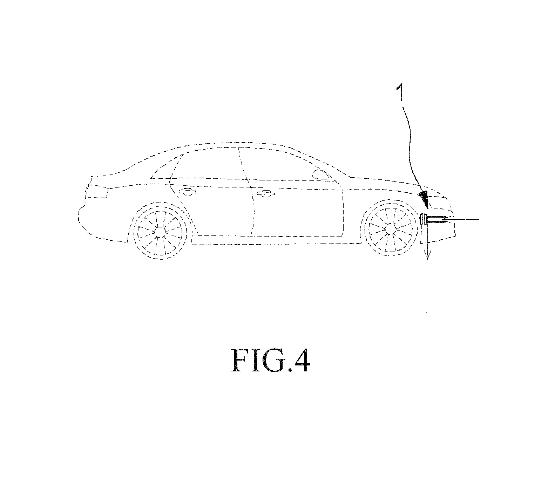

Referring to FIGS. 2, 3, and 4, which demonstrate the use and operation of the present invention, the automatic energy generation device 1 can be installed with different number of sets according to the model of transport (two sets of the energy generation device being used as an example in the embodiment illustrated). The automatic energy generation devices 1 are mounted at a front portion (namely the upwind portion), particularly the engine bay, of the transport. When the transport is moving, the wind blowing toward the transport changes the magnitude thereof according to the speed of the transport. When the wind or air stream gets into temporal air storage chamber102 formed inside the air accumulation device 10, the sensor 13 detects the density, temperature, and humidity of the air flowing therethrough, and the control device 15 performs analysis on the detection data. The result of analysis is used to determine if to activate the electrical discharge device 12. When the sensor 13 that is mounted to an inside surface of the air accumulation device 10 detects that the conditions of the air are different from predetermined references, the electrical discharge device 12 is activated to perform electrical discharge to the air that has been subjected to the analysis.

(Alternatively, the electrical discharge device 12 may directly discharge electricity to the air without being controlled by the control device 15). As such, the fluid molecules of air carry electricity, which can be then converted into electrical power. The electricity carried by the fluid molecules is a minor amount of electrical corona (which is not usable electrical power). The minor amount of electrical corona may serve as a catalyst that causes fragmentation of the fluid molecules (particles) and induces abrasion and impact. The electricity accumulator 11 then collects electrical power. The electrical power so collected is converted by the current conversion controller 16 into direct-current power to be stored in the battery (lithium cell) 18 or be directly used by transport. (The current conversion controller 16 determines the way of power supplying according to the operation condition of the transport.) Further, the current conversion controller 16 also provides a voltage regulation function. The air that has undergone power conversion is then discharged through the air outlet 14.

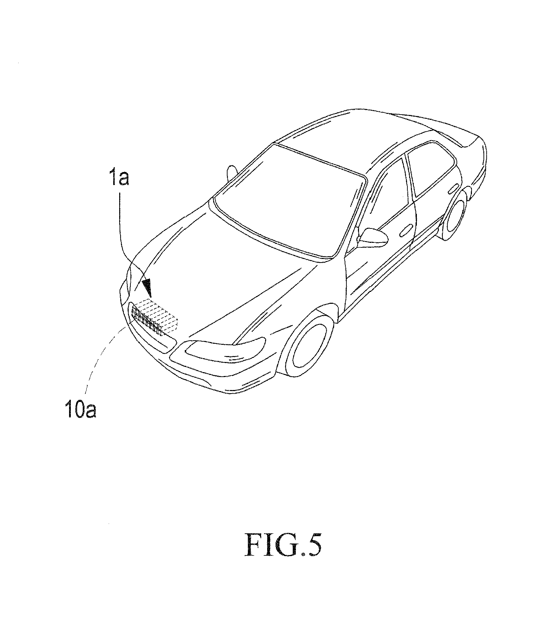

Referring to FIG. 5, another embodiment of the present invention is shown, wherein 16 sets of automatic energy generation device 1a are taken as an example. With the arrangement of a multiplicity of air accumulation devices 10a that are respectively associated with multiple electricity accumulators 16a, the performance of conversion of wind power into electrical power can be greatly increased. Since the automatic energy generation devices 1a make the air contained therein carrying electricity on fluid molecules thereof to convert air into electrical power, this arrangement enables the omission of fans and reduces the amount of space occupied thereby Thus, this invention allows for the increase of the number of sets of the device to ensure everlasting charging for driving a transport and extend the cruising range. The general operation of this example is the same as the previous ones and further detail is not needed herein.

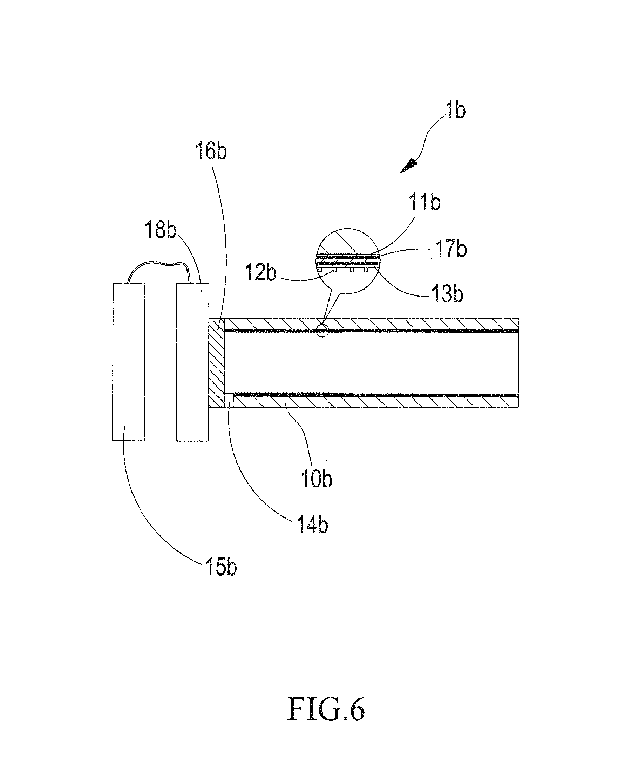

Referring to FIG. 6, which is a cross-sectional view showing an automobile energy generation device, generally designated at 1b, according to a further embodiment of the present invention, when the automatic energy generation device 1b is used in a non-frigid zone or the tropic zone, an electricity accumulator 11b that is arranged on an inside surface of an air accumulation device 10b is combined with an electrical discharge device 12b, a sensor 13b, and a temperature controller 17b, wherein the temperature controller 17b functions to change the temperature of air inside the air accumulation device 10b as desired and the sensor 13b detects if the air resumes a normal condition, so as to have the electrical discharge device 12b activated, whereby the electrical discharge device 12b generates electrical current to make the fluid molecules of the air carrying electricity for conversion into electrical power. Afterwards, the electricity accumulator 11b collects the electrical power, which is converted by a current conversion controller 16b into a direct-current power for storage in a battery (lithium cell) 18b or to be directly used by a transport. Further, the current conversion controller 16b also provides a voltage regulation function. The air that has undergone power conversion is then discharged through an air outlet 14b.

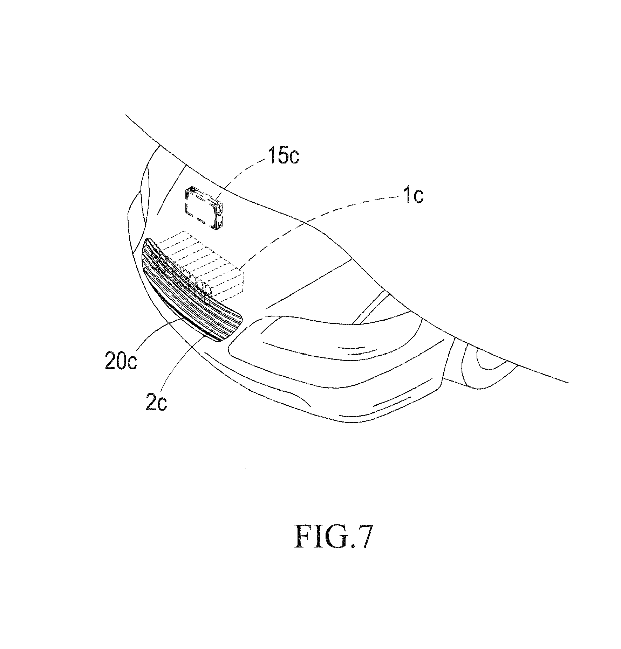

Referring to FIG. 7, a further embodiment of the present invention is shown, wherein when an automatic energy generation device 1c according to the present invention is used in a frigid zone, a thermal control device 2c is installed at a wind receiving portion of a transport and the thermal control device 2c is coupled to a detector 20c. When the detector 20c detects a difference of the current condition of air from a predetermined reference (such as excessively low temperature), meaning the wind receiving opening in the front portion of the transport is frosting or receives snow deposited thereon. Under this condition, a control device 15c is operated to activate the thermal control device 2c in order to remove the excessively low temperature condition so as to alleviate frosting or snow deposition.

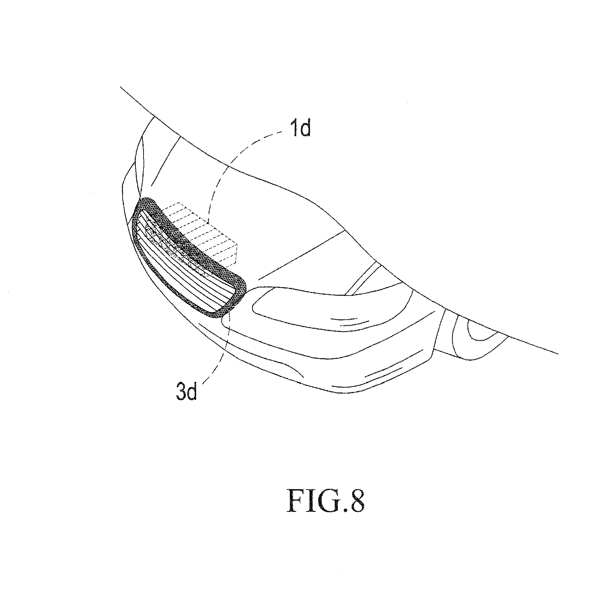

Referring to FIG. 8, yet a further embodiment of the present invention is shown, wherein a shielding net 3d may be additionally mounted to the wind receiving portion of the transport. The shielding net 3d functions to prevent foreign objects (such as tree leaves or broken stones) from entering a moving transport. The shielding net 3d is useful in any area and any country

The above discussed examples or embodiments are applied to a car. However, it is noted that the present invention is also applicable to any other type of transport (such as a train, an airplane, a vessel, and a motorcycle), and is not limited in use thereof to any specific transport.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. An automatic pollution-free energy generation device (1, 1a, 1b, 1c) for transport, which is adapted to be mounted to a wind-receiving portion of the transport, the automatic pollution-free energy generation device (1, 1a, 1b, 1c) comprising:
an air accumulation device (10, 10a, 10b), which forms a temporal air storage chamber (102), which receives air to flow therethrough, the air accumulation device (10, 10a, 10b) forming an air outlet (14,14b) at a predetermined location for discharging of the air;
an electricity accumulator (11, 11b), which is arranged on an inside surface of the air accumulation device (10, 10a, 10b) and located in the temporal air storage chamber (102), the electricity accumulator (11, 11b) being coupled to a sensor (13, 13b) that detects density, temperature, and humidity of the air in the chamber and an electrical discharge device (12, 12b) that is operable to perform electrical discharge to the air inside the temporal air storage chamber (102); and
a current conversion controller (16, 16b), which is coupled to the electricity accumulator (11, 11b) to receive electrical power that is received in the electricity accumulator (11, 11b) and perform conversion of alternate current into direct current and regulate an output of electrical current to a battery (18, 18b) or to be directly used by the transport.

2. The automatic pollution-free energy generation device (1, 1a, 1b, 1c) according to claim 1 further comprising a temperature controller (17b), which is coupled to the air accumulation device (10, 10a, 10b) to perform temperature adjustment on the air accumulation device (10, 10a, 10b) and the air.

3. The automatic pollution-free energy generation device (1, 1a, 1b, 1c) according to claim 1, wherein the battery (18, 18b) comprises a lithium cell.

4. The automatic pollution-free energy generation device (1, 1a, 1b, 1c) according to claim 1 further comprising a control device (15, 15b, 15c) connected to the battery (18, 18b) for controlling use of the battery (18, 18b).

5. The automatic pollution-free energy generation device (1, 1a, 1b, 1c) according to claim 4, wherein the control device (15, 15b, 15c) is connected to the sensor (13, 13b) and the electrical discharge device (12, 12b) for controlling the detection of condition of the air and electricity discharged.

6. The automatic pollution-free energy generation device (1, 1a, 1b, 1c) according to claim 1 further comprising a thermal control device (2c) that is arranged at a wind receiving portion of the transport.

7. The automatic pollution-free energy generation device (1, 1a, 1b, 1c) according to claim 6, wherein the thermal control device (2c) comprises a detector (20c) for detecting temperature of air.

8. The automatic pollution-free energy generation device (1, 1a, 1b, 1c) according to claim 1 further comprising a shielding net (3d) mounted to a wind receiving portion of the transport.
